# EUROPÄISCHE PATENTANMELDUNG

(11) **EP 1 460 327 A1**
(43) Veröffentlichungstag der Anmeldung: **22.09.2004**
(21) Anmeldenummer: 04003984.4
(22) Anmeldetag: 01.03.2004
(51) Int. Cl.: F16L 37/47, F16K 1/22

(54) **Verriegelungsvorrichtung für den Betätigungshebel einer Verschlussklappe eines Anschlussstutzens einer Rohrleitung**

(30) Priorität: 18.03.2003 DE 10312068
(71) Anmelder: Bitburger Brauerei Th.Simon GmbH, 54634 Bitburg (DE)
(72) Erfinder: von de Braak, Benno, 54634 Bitburg (DE); Lonien, Matthias, 54647 Dudeldorf (DE)
(74) Vertreter: Serwe, Karl-Heinz, Dipl.-Ing.

(57) **Zusammenfassung**

In Brauereien und Lebensmittelbetrieben ist es bekannt, die notwendige Verrohrung in Paneeltechnik auszuführen, bei der auf der Paneelplatte verschiedene Leitungen mit einer von Hand betätigbaren Verschlussklappe enden. Es ist bekannt, die Betätigung dieser Verschlussklappen mit einem pneumatischen Antrieb und einem zugeordneten Näherungsindikator zu sichern.

Zur Vereinfachung der Handhabung und zur Verringerung der Kosten wird vorgeschlagen, im Anschlussstutzen (2) eine von einer vorgespannten Feder (9) belastete Verriegelungsklinke (10) anzuordnen, die in Schließstellung der Verschlussklappe (5) in eine zugeordnete Sperrausnehmung (11) des Betätigungshebels (12) der Verschlussklappe (5) eingreift und die bei Anschluss einer Rohrleitung (4,3) od.dgl. an den Anschlussstutzen (2) entgegen der Kraft der Feder (9) in eine den Betätigungshebel (12) freigebende Stellung bewegt ist.

## Beschreibung

Die Erfindung betrifft eine Verriegelungsvorrichtung für den Betätigungshebel einer Verschlussklappe eines Anschlussstutzens einer Rohrleitung, wobei an den Anschlussstutzen eine weitere Rohrleitung, ein Koppelbogen, eine Blindklappe od.dgl. anschließbar ist.

In Brauereien und Lebensmittelbetrieben ist die Verrohrung über Paneeltechnik eine gängige und kostengünstige Alternative zu den sehr aufwendigen Ventilknoten. Bei dieser Art der Verrohrung enden verschiedene Leitungen mit einer von Hand betätigbaren Verschlussklappe und einem Anschlussstutzen auf der Paneelplatte, wo sie über Koppelbögen in verschiedenen Kombinationen verbunden werden können. Bei nicht verwendetem Anschlussstutzen bleiben die Verschlussklappen geschlossen und werden in manchen Fällen zusätzlich durch eine Blindklappe gesichert.

Bei den Anschlussstutzen können sich jeweils verschiedene Medien unter Druck auf der anderen Seite der Verschlussklappe befinden, die bei irrtümlicher Öffnung den Bediener gefährden können. Besonders große Gefährdungen treten auf, wenn sich auf der anderen Seite der Verschlussklappe Heißlauge befindet.

Es ist bekannt, die Klappen mit einem pneumatischen Antrieb und einem Näherungsindikator zu sichern, dessen Steuerung die Klappe verriegelt, falls keine weitere Rohrleitung, ein Koppelbogen od.dgl. mehr am Anschlussstutzen angeschlossen ist.

Abgesehen davon, dass die Absicherung des Anschlusstutzens durch eine Blindklappe nur sehr umständlich mit Hilfe des Näherungsindikators abgefragt werden kann, ist diese bekannte Lösung sehr teuer.

Die Aufgabe der Erfindung besteht daher darin, eine Verriegelungsvorrichtung der eingangs genannten Art vorzuschlagen, die einfach zu handhaben ist und die kostengünstig ist.

Zur Lösung dieser Aufgabe wird vorgeschlagen, dass im Anschlussstutzen eine von einer vorgespannten Feder belastete Verriegelungsklinke angeordnet ist, die in Schließstellung der Verschlussklappe in eine zugeordnete Sperrausnehmung des Betätigungshebels eingreift und die bei Anschluss einer Rohrleitung od.dgl. an den Anschlussstutzen entgegen der Kraft der Feder in eine den Betätigungshebel freigebende Stellung bewegt ist.

Vorteilhaft hat die Verriegelungsklinke einen Betätigungsstift, der im Anschlussflansch des Anschlussstutzens verschiebbar angeordnet ist und den Anschlussflansch auf der Seite des Angriffstutzens derart überragt, dass die Verriegelungsklinke bei Anschluss einer Rohrleitung od.dgl. in Freigabestellung geschoben ist.

Vorzugsweise ist zur Verbindung einer Rohrleitung mit dem Anschlussstutzen eine Überwurfmutter auf den Anschlussstutzen aufschraubbar, die mit der Verriegelungsklinke/dem Betätigungsstift zusammenwirkt.

Bei einer vorteilhaften Ausführungsform sind im Anschlussflansch des Anschlussstutzens zwei Betätigungsstifte im Abstand zueinander angeordnet, die mit der Verriegelungsklinke verbunden sind.

Vorzugsweise ist die vorgespannte Feder zwischen dem Kopf eines Betätigungsstiftes und dem Anschlussflansch angeordnet.

Die Verriegelungsklinke ist vorzugsweise an der dem Anschlussstutzen abgewandten Seite des Anschlussflansches angeordnet.

Vorteilhaft ist der Betätigungungshebel derart angeordnet, dass er bei geöffneter Verschlussklappe in Längsrichtung des Anschlussstutzens verläuft. Vorzugsweise ist der Betätigungshebel in einem Abstand'oberhalb des Anschlussstutzens angeordnet, der nur wenig größer als die Ringstärke der Überwurfmutter ist.

Bei einer weiter vorteilhaften Ausführungsform ist mit dem Betätigungshebel eine parallel und im Abstand verlaufende Sperrklinke unterhalb des Anschlussstutzens in einem Abstand angeordnet, der nur wenig größer als die Ringstärke der Überwurfmutter ist.

Die Erfindung ist in den Zeichnungen beispielhaft dargestellt. Es zeigen:
- Fig. 1: einen Anschlussstutzen in verriegelter Stellung in Seitenansicht,
- Fig. 2: den Anschlussstutzen nach Fig. 1 in Rückansicht,
- Fig. 3: den Anschlussstutzen in Freigabestellung der Verriegelungsklinke in Seitenansicht und
- Fig. 4: den Anschlussstutzen bei geöffneter Verschlussklappe in Seitenansicht.

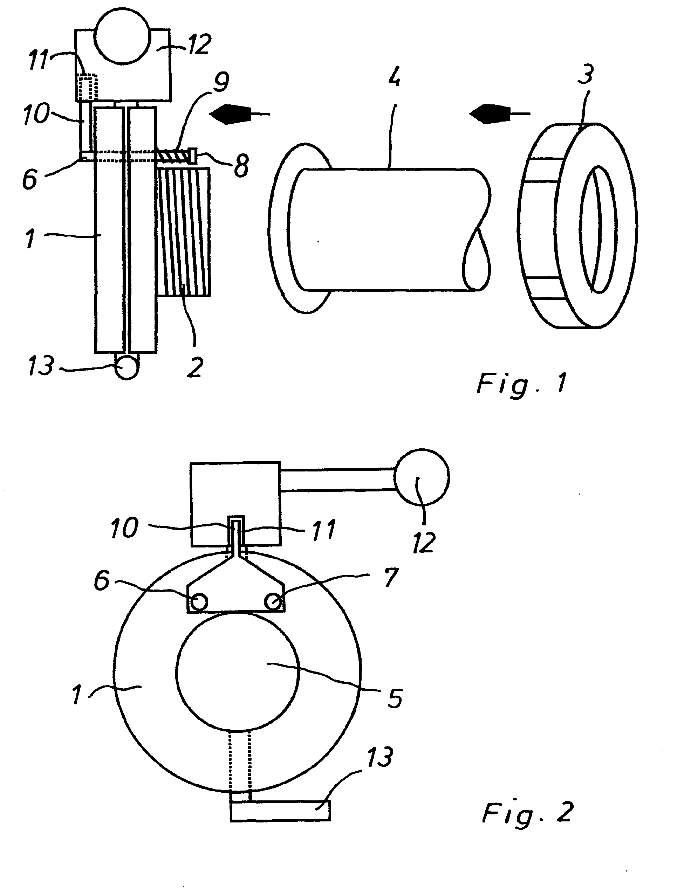

Nach den Figuren 1 und 2 sitzt ein Anschlussflansch 1 am Ende einer nicht dargestellten Rohrleitung. Der Anschlussflansch 1 hat einen mit einem Außengewinde versehenen Anschlussstutzen 2, an den mit Hilfe einer Überwurfmutter 3 eine weitere Rohrleitung 4, ein Koppelbogen, eine Blindklappe od.dgl. angeschlossen werden kann.

Im Anschlussflansch 1 ist eine Verschlussklappe 5 angeordnet (Fig. 2), die in der in Fig. 1 und 2 dargestellten Stellung die nicht dargestellte Anschlussleitung abschließt. Die Verschlussklappe 5 ist über einen von Hand betätigbaren Betätigungshebel 12 zu öffnen.

Wie die Figuren 1 und 2 weiter zeigen, sind im Verschlussflansch 1 im Abstand zueinander und parallel zur Rohrachse zwei Betätigungsstifte 6 und 7 verschiebbar angeordnet, die den Verschlussflansch 1 in Richtung des Anschlussstutzens 2 überragen. Einer der Betätigungsstifte 6 hat an seinem einen Ende einen Kopf 8, zwischen dem und dem Anschlussflansch 1 eine vorgespannte Druckfeder 9 auf dem Betätigungsstift 6 angeordnet ist.

Das andere Ende der Betätigungsstifte 6 und 7 ist mit einer Verriegelungsklinke 10 verbunden, die in eine zugeordnete Sperrausnehmung 11 des Betätigungshebels 12 eingreift und so den Betätigungshebel 12 gegen ein Öffnen sichert.

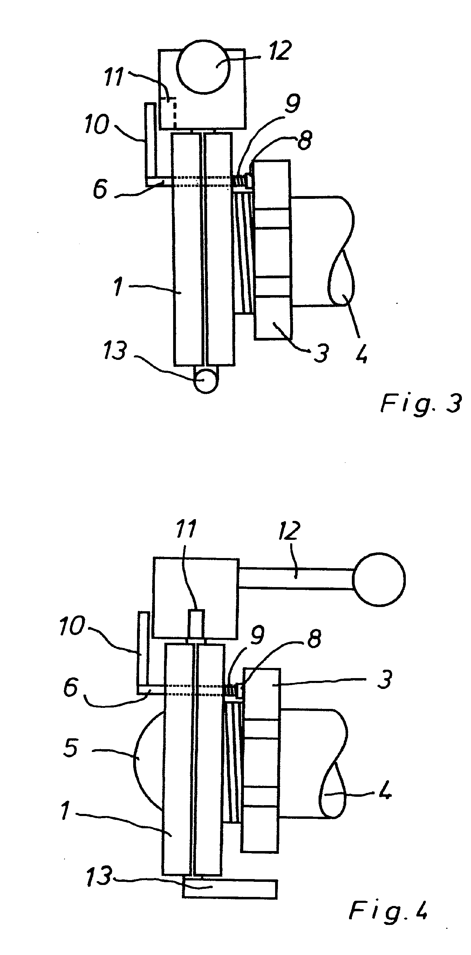

Wird nun auf den Anschlussstutzen 2 eine Rohrleitung 4 aufgesetzt und mit der Überwurfmutter gesichert, so wird der Kopf 8 des Betätigungsstiftes 6 entgegen der Kraft der vorgespannten Feder 9 in Richtung Anschlussflansch 1 gepreßt, sodass die Verriegelungsklinke 10 aus der Sperrausnehmung 11 gelangt und so den Betätigungshebel 12 frei gibt, wie dies in Fig. 3 dargestellt ist.

Nunmehr kann der Betätigungshebel 12 in die in Fig. 4 dargestellte Freigabestellung geschwenkt werden, sodass die Verschlussklappe 5 geöffnet ist.

Wie die Figuren 1 bis 4 zeigen, ist der Betätigungshebel 12 oberhalb des Anschlussstutzens 2 angeordnet und mit einer Sperrklinke 13 unterhalb des Anschlussstutzens verbunden. In verriegelter Stellung verlaufen Betätigungshebel 12 und Sperrklinke 13 im rechten Winkel zu der Längsachse des Anschlussstutzens 2, während in geöffneter Stellung der Verschlussklappe 5 der Betätigungshebel 12 und die Sperrklinke 13 in Längsrichtung des Anschlussstutzens 2 verlaufen. Da zwischen Betätigungshebel 12 und Überwurfmutter 3 sowie zwischen Sperrklinke 13 und Überwurfmutter nur ein geringer Abstand vorhanden ist, wird bei geöffneter Verschlussklappe 5 das Ansetzen eines Werkzeuges zum Öffnen der Überwurfmutter verhindert.

## Patentansprüche

1. Verriegelungsvorrichtung für den Betätigungshebel einer Verschlussklappe eines Anschlussstutzens einer Rohrleitung, wobei an den Anschlussstutzen eine weitere Rohrleitung, ein Koppelbogen, eine Blindklappe od.dgl. anschließbar ist, **dadurch gekennzeichnet, dass** im Anschlussstutzen (2) eine von einer vorgespannten Feder (9) belastete Verriegelungsklinke (10) angeordnet ist, die in Schließstellung der Verschlussklappe (5) in eine zugeordnete Sperrausnehmung (11) des Betätigungshebels (12) eingreift und die bei Anschluss einer Rohrleitung (4, 3) od.dgl. an den Anschlussstutzen entgegen der Kraft der Feder in eine den Betätigungshebel freigebende Stellung bewegt ist.

2. Verriegelungsvorrichtung nach Anspruch 1, **dadurch gekennzeichnet, dass** die Verriegelungsklinke (10) einen Betätigungsstift (6, 7) hat, der im Anschlussflansch (1) des Anschlussstutzens (2) verschiebbar angeordnet ist und den Anschlussflansch auf der Seite des Anschlussstutzens derart überragt, dass die Verriegelungsklinke (10) bei Anschluss einer Rohrleitung (4, 3) od.dgl. in Freigabestellung geschoben ist.

3. Verriegelungsvorrichtung nach Anspruch 1 oder 2, **dadurch gekennzeichnet, dass** zur Verbindung einer Rohrleitung (4) mit dem Anschlussstutzen (2) eine Überwurfmutter (3) auf den Anschlussstutzen aufschraubbar ist, die mit der Verriegelungsklinke (10)/dem Betätigungsstift (6, 7) zusammenwirkt.

4. Verriegelungsvorrichtung nach Anspruch 2 oder 3, **dadurch gekennzeichnet, dass** im Anschlussflansch (1) des Anschlussstutzens (2) zwei Betätigungsstifte (6, 7) im Abstand zueinander angeordnet sind, die mit der Verriegelungsklinke (10) verbunden sind.

5. Verriegelungsvorrichtung nach einem der Ansprüche 2 bis 4, **dadurch gekennzeichnet, dass** die vorgespannte Feder (9) zwischen dem Kopf (8) eines Betätigungsstiftes (6) und dem Anschlussflansch (1) angeordnet ist.

6. Verriegelungsvorrichtung nach einem der Ansprüche 1 bis 5, **dadurch gekennzeichnet, dass** die Verriegelungsklinke (10) an der dem Anschlussstutzen (2) abgewandten Seite des Anschlussflansches (1) angeordnet ist.

7. Verriegelungsvorrichtung nach einem der Ansprüche 1 bis 6, **dadurch gekennzeichnet, dass** der Betätigungshebel (12) derart angeordnet ist, dass er bei geöffneter Verschlussklappe (5) in Längsrichtung des Anschlussstutzens (2) verläuft.

8. Verriegelungsvorrichtung nach Anspruch 7, **dadurch gekennzeichnet, dass** der Betätigungshebel (12) in einem Abstand oberhalb des Anschlussstutzens (2) angeordnet ist, der wenig größer als die Ringstärke der Überwurfmutter (3) ist.

9. Verriegelungsvorrichtung nach Anspruch 8, **dadurch gekennzeichnet, dass** mit dem Betätigungshebel (12) eine parallel und im Abstand verlaufende Sperrklinke (13) unterhalb des Anschlussstutzens (2) in einem Abstand angeordnet ist, der wenig größer als die Ringstärke der Überwurfmutter (3) ist.
